(19) **Europäisches Patentamt**
**European Patent Office**
**Office européen des brevets**

(11) **EP 3 682 524 B1**

(12) **EUROPEAN PATENT SPECIFICATION**

(45) Date of publication and mention
of the grant of the patent:
**02.07.2025 Bulletin 2025/27**

(21) Application number: **18856473.6**

(22) Date of filing: **12.09.2018**

(51) International Patent Classification (IPC):
*H02J 7/00* (2006.01)     *H05B 1/02* (2006.01)
*F24H 1/10* (2022.01)     *A47J 27/21* (2006.01)

(52) Cooperative Patent Classification (CPC):
**H05B 1/0269; A47J 27/21008; F24H 9/2021;**
**F24H 15/144; F24H 15/223; F24H 15/37;**
**F24H 15/414; H02J 7/0068; H02J 7/007182;**
F24H 15/132; F24H 15/14; F24H 15/174;
F24H 15/25; F24H 15/281; F24H 15/288;     (Cont.)

(86) International application number:
**PCT/AU2018/000174**

(87) International publication number:
**WO 2019/051529 (21.03.2019 Gazette 2019/12)**

(54) **A LIQUID HEATING APPLIANCE FOR MAKING A BEVERAGE AND ASSOCIATED METHOD, POWER MANAGEMENT SYSTEM AND MICROCONTROLLER READABLE MEDIUM**

FLÜSSIGKEITSERHITZUNGSVORRICHTUNG ZUR HERSTELLUNG EINES GETRÄNKS UND ZUGEHÖRIGES VERFAHREN, ENERGIEVERWALTUNGSSYSTEM UND MIKROCONTROLLER-LESBARES MEDIUM

APPAREIL DE CHAUFFAGE DE LIQUIDE PERMETTANT DE FABRIQUER UNE BOISSON ET PROCÉDÉ ASSOCIÉ, SYSTÈME DE GESTION D'ALIMENTATION ET SUPPORT LISIBLE PAR MICROCONTRÔLEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.09.2017 AU 2017903705**

(43) Date of publication of application:
**22.07.2020 Bulletin 2020/30**

(73) Proprietor: **Breville Pty Limited**
**Alexandria, New South Wales 2015 (AU)**

(72) Inventors:
• **PSAROLOGOS, Con**
**Alexandria, NSW 2015 (AU)**

• **REN, Xiang**
**Alexandria, NSW 2015 (AU)**

(74) Representative: **Papa, Elisabetta et al**
**Società Italiana Brevetti S.p.A**
**Piazza di Pietra, 39**
**00186 Roma (IT)**

(56) References cited:
**WO-A2-2008/155538     WO-A2-2008/155538**
**CN-A- 101 086 385     CN-U- 204 063 167**
**CN-U- 206 102 408     GB-A- 2 536 000**
**JP-B2- 4 869 375     JP-B2- 6 065 641**
**US-A- 6 037 571**

(52) Cooperative Patent Classification (CPC): (Cont.)
F24H 15/407; H05B 2203/005

## Description

### Technical Field

The present invention relates generally to a liquid heating appliance for making a beverage, a power management system for the liquid heating appliance, a method for controlling a liquid heating appliance and a microcontroller readable medium.

### Background

Standard liquid heating appliances such as kettles, coffee makers, tea makers etc., heat up water, for example, for use when making beverages using the power that is available from the main power supply to which the appliance is connected.

At times, depending on which country or location the appliance is being used, the power available via the main domestic power supply, or indeed any other provided power supply, may not be sufficient to heat the water up in what is considered to be a reasonable amount of time.

For example, in the U.S.A., the domestic mains power supply provides a power source with a maximum power output of 1800 Watts. Whereas, in Australia, the maximum power output from the domestic mains power supply is 2400 Watts. Therefore, in the U.S.A. a kettle, for example, may take a certain amount of time to boil water, or at least heat the water to a desired temperature, whereas in Australia, the same kettle may take less time to boil the water or heat the water to the desired temperature. Where a domestic mains power supply is provided having a maximum power output of 3000 Watts, the time to boil the water or reach the desired temperature may be reduced even further.

GB 2 5 36 000 A discloses an electric liquid heating appliance. WO 2008/155538 A2 discloses a liquid heating vessel and electronic controls therefor. JP 6 065641 B2 discloses a distributed power supply system, and a diagnosis method thereof. JP 4 869375 B2 discloses a hot water system.

### Summary

It is an object of the present invention to substantially overcome, or at least ameliorate, one or more disadvantages of existing arrangements.

Disclosed are arrangements which seek to address one or more of the above problems by providing a liquid heating appliance for making a beverage comprising a power management system for the liquid heating appliance, a method for controlling a liquid heating appliance and a microcontroller readable medium that enable improved heating times for a liquid being heated in the liquid heating appliance.

According to a first aspect of the present disclosure, there is provided liquid heating appliance for making a beverage, the liquid heating appliance comprising: a plurality of heating components for heating a liquid, where at least a first of the plurality of heating components is powered using mains power, and a power management system, wherein the power management system comprises: a controller, and an energy storage device, wherein the controller is arranged to control an amount of the mains power applied to the first of the plurality of heating components, and further arranged to control an amount of stored power from the energy storage device to be applied to at least a second of the plurality of heating components. The liquid heating appliance further comprises an inverter and a power regulator, wherein the inverter is arranged to convert a direct current power output from the energy storage device into an alternating current power output , and the power regulator is arranged to regulate how much power of the alternating current power output is applied to the at least second of the plurality of heating components.

There is also disclosed a power management system for use in a liquid heating appliance for making a beverage, wherein the liquid heating appliance has a plurality of heating components for heating a liquid, the power management system comprising: a controller, and an energy storage device, wherein the controller is arranged to control an amount of mains power applied to a first of the plurality of heating components, and further arranged to control an amount of power from the energy storage device to be applied to at least a second of the plurality of heating components.

According to a second aspect of the present disclosure, there is provided a method of controlling the provision of power in a liquid heating appliance for making a beverage, the method comprising the steps of: controlling an amount of mains power being

applied to a first of a plurality of heating components in the liquid heating appliance, and controlling an amount of stored power in an energy storage device integrated with the liquid heating appliance being applied to at least a second of the plurality of heating components. The method comprises converting a direct current power output from the energy storage device into an alternating current power output, and regulating how much power of the alternating current power output is applied to the at least second of the plurality of heating components

According to a third aspect of the present disclosure, there is provided a microcontroller readable medium, having a program recorded thereon, where the program is configured to make a microcontroller execute a procedure to control an amount of mains power being applied to a first of a plurality of heating components in a liquid heating appliance, and control an amount of stored power in an energy storage device integrated with the liquid heating appliance being applied to at least a second of the plurality of heating components.

Other aspects are also disclosed.

## Brief Description of the Drawings

At least one embodiment of the present invention will now be described with reference to the drawings and appendices, in which:

Fig. 1A shows a liquid heating appliance in the form of a kettle according to the present disclosure;

Fig. 1B shows a block diagram of a system for controlling a liquid heating appliance according to the present disclosure;

Fig. 2 shows a block diagram of a power management system for controlling a liquid heating appliance according to the present disclosure;

Figs. 3A and 3B show heater wiring circuits for heating components used in a liquid heating appliance according to the present disclosure;

Fig. 4 shows an example of an energy storage system for use with a liquid heating appliance according to the present disclosure;

Fig. 5 shows an arrangement of heater wiring circuits and an energy storage system for use with a liquid heating appliance according to the present disclosure;

Fig. 6 shows a process flow diagram for use in a liquid heating appliance according to the present disclosure;

Fig. 7 shows a heating process profile according to an example in the present disclosure;

Fig. 8 shows an alternative heating process profile according to an example in the present disclosure;

Fig. 9 shows a further alternative process profile according to an example in the present disclosure.

## Detailed Description including Best Mode

Although the herein described embodiments relate to water heating appliances for making a beverage, it will be understood that the appliance may be used to heat up other suitable potable liquids, or mixtures of liquids, for making beverages.

The following described embodiments relate to a kettle that boils water to enable a user to make a hot beverage, such as tea, coffee or the like. It will be understood that the described components and processes may be implemented in any suitable liquid heating appliance that can be used to make a beverage, such as a coffee maker, a tea maker and the like. It will also be understood that the described components and processes may be implemented to enable liquids other than water to be heated up in the appliance, where the temperatures used to control the processes are adjusted accordingly dependent on the liquid being heated.

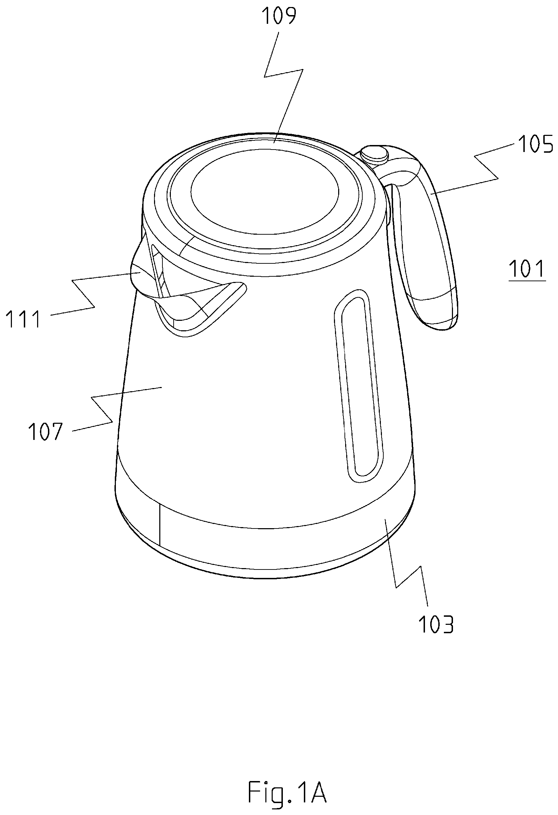

Fig. 1A shows a liquid heating appliance in the form of a kettle 101.

The kettle 101 has a base 103 through which power is provided by way of a power supply unit (not shown). A handle 105 is provided with a user interface to enable the user to control the kettle. The body 107 of the kettle forms a receptacle for holding the liquid to be heated. A lid 109 is provided to keep the majority of steam of the liquid when it is being heated inside the kettle. A spout 111 is provided to enable the heated liquid to be poured out of the receptacle.

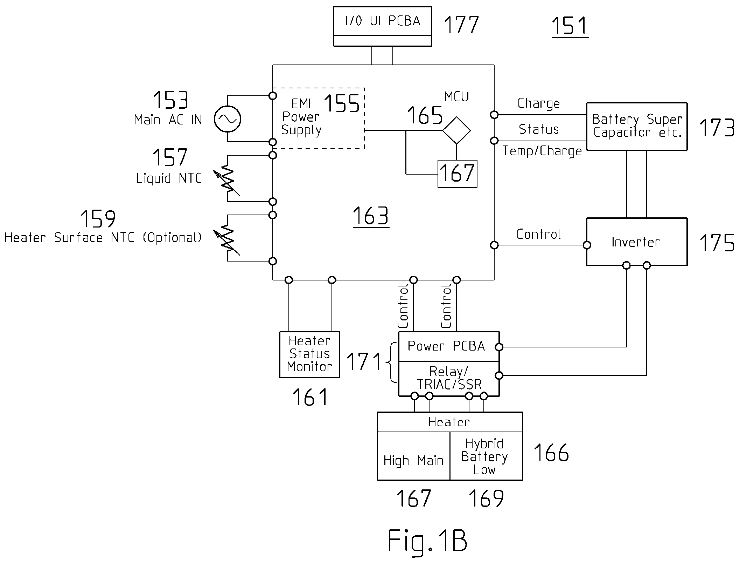

Fig. 1B shows a block diagram of a system 151 for controlling the kettle 101 when it is being used to make a beverage.

The system 151 has an AC mains power input 153 that feeds mains power to a mains power supply 155 that has EMI (Electromagnetic Interference) shielding. A first sensor 157, in the form of a negative temperature coefficient (NTC) sensor, is provided for detecting liquid temperature of the liquid being heated inside the kettle. The first sensor 157 is attached internally to the base of the kettle 101.

The liquid temperature sensor is arranged to sense a temperature of the liquid being heated by one or more of the heaters of the liquid heating appliance. The controller 165 is arranged to control the amount of power being applied to one or more of the heaters based on the sensed liquid temperature.

According to an optional example, a second sensor 159, also in the form of a negative temperature coefficient (NTC) sensor, is provided for detecting the surface temperature of a heater used to heat the liquid in the kettle 101.

The surface temperature sensor is arranged to sense a surface temperature of the main heater. The controller is arranged to control the amount of the mains power being applied to the main heater based on the sensed surfaced temperature.

A dry boil monitoring system 161 is provided. The dry boil monitoring system uses the exponential relationship between the temperature of the heater and the leakage current of the heater (the E-fast system) to provide thermal protection for the heater(s) of the kettle by determining whether the heater(s) of the kettle are switched on when there is no water inside the kettle. The leakage current may be used as an input signal to the controller to determine whether the heater(s) should be turned off to prevent damage.

A main PCBA (printed circuit board assembly) 163 is provided with a microcontroller 165 that is arranged to control the various processes based on instructions that are stored in memory 164. The memory may be, for example, a ROM or EEPROM.

Further sub systems are included as follows. A dual heater system 166 that includes a main heater 167 and a hybrid heater 169 is provided. The dual heater system 166 communicates with an electronics control system 171. The electronics control system 171 has a power PCBA, with relays and other switches (e.g. TRIACs and solid state relays) assembled thereon for control and management of the heaters (167, 169). Control lines are used to feed control signals to the power PCBA from the microcontroller 165 for the control and management of the heaters.

The main heater 167 may be considered a single heating component that may have one or more heating elements. Likewise, the hybrid heater 169 may be considered a single heating component that may have one or more heating elements. It will be understood that the liquid heating appliance may have a single main heater or multiple main heaters. Likewise, it will be understood that the liquid heating appliance may have a single hybrid heater or multiple hybrid heaters.

An energy storage device 173 is provided that has associated control circuitry that communicates with the microcontroller 165. The control lines signify, for example, a charge status of the energy storage device, or a temperature change associated with the energy storage device. The temperature change of the energy storage device may be detected by a temperature sensor, such as an infrared sensor for example.

The energy storage device and associated control circuitry may be located inside the body of the appliance, may be integrated with the body of the appliance.

According to one example, the energy storage device includes a plurality of capacitor banks and has associated with it one or more control switches, as will be explained in more detail below. According to an alternative example, the energy storage device may include one or more battery storage devices, where the device has associated with it one or more control switches. Therefore, the energy storage device may include a capacitor, a capacitor bank, a super capacitor, a super capacitor bank, or a battery. It will be understood that any suitable form of energy storage may be used.

An inverter 175 converts the direct current (DC) energy (i.e. power output) from the energy storage device into an alternating current (AC) energy (i.e. power output) which is then used to heat up the hybrid heater 169.

A user interface (UI) PCBA 177 is connected to the main PCBA 163 to communicate input and output signals between the main PCBA 163 and the user interface of the kettle. For example, one or more control signals may be generated at the UI when a user selects a particular mode of operation. This control signal(s) is communicated back to the main PCBA 163 to the controller 165 to enable the controller 165 to control the various components of the system dependent on the generated control signal(s).

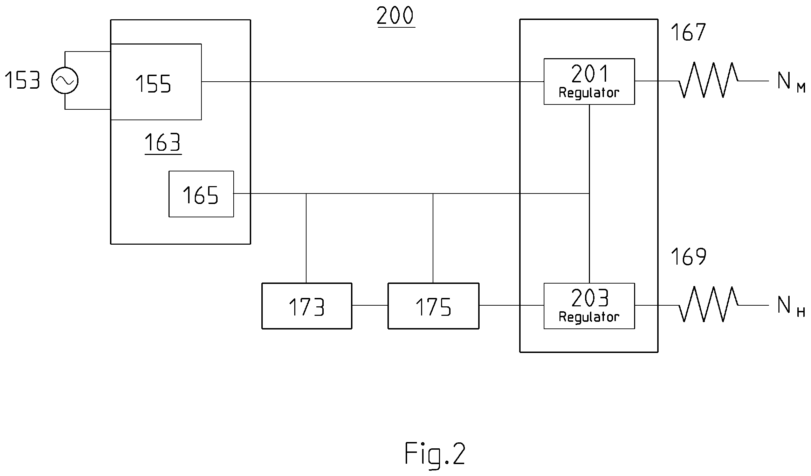

Fig. 2 shows a block diagram of a power management system 200 forming part of the system as described with reference to Fig. 1B for controlling a liquid heating appliance.

The power management system 200 uses the controller 165 to control the amount of power being applied to each of the heaters (167, 169) by controlling power regulator 201 (for the main heater 167) and power regulator 203 (for the hybrid heater 169) via control lines between the regulators (201, 203) and the controller 165. Control lines are connected (as also shown in Fig. 1B) between the controller 165 and the energy storage device 173 and inverter 175. Each power regulator is arranged to regulate how much power of the alternating current power provided is applied to the respective heaters.

According to a mode of operation, when the appliance is not being used to heat a liquid, e.g. it is in standby mode, the energy storage device is charged up under control of the controller 165. Control signals are fed back to a display on the UI to inform the user of the percentage of the charge of the energy storage device.

According to another mode of operation, under control of the controller 165, the main heater 167 draws power from the mains power supply by the power management system via the power regulator 201. In this mode, the hybrid heater 169 does not draw any power from the energy storage device. According to one example, 100% of available power is drawn from the mains by the main heater 167 to heat the main heater 167.

According to another mode of operation, under control of the controller 165, power from the energy storage device may be used to heat up the hybrid heater 169 at the same time as the main heater 169 is being heated up also under control of the controller 165. The controller 165 prevents the energy storage device from being charged during this mode. The controller 165 activates both heating circuits (main and hybrid) in this mode. The AC mains input provides power to the main heater 167 while the energy storage device provides power to the hybrid heater 169.

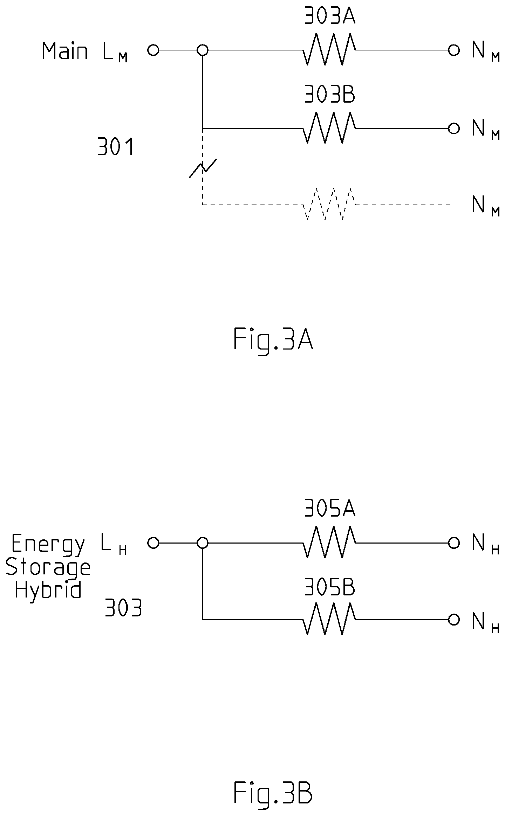

Figs. 3A and 3B show heater wiring circuits that may be used for the main heater 167 and hybrid heater 169 in a liquid heating appliance.

Fig. 3A shows the heater wiring circuit 301 for the main heater 167. One or more heating components (303A, 303B etc.), e.g. heating elements, are provided for the main heater 167. The heating components in this example are resistive heating components. A first end of each heating component for the main heater 167 is connected to the incoming mains power live terminal. A second end of each heating component for the main heater 167 has a mains neutral connection ($N_m$) that is common to all heating components for the main heater 167. By selectively turning on individual heating components, the amount of power applied to the main heater 167 as a whole can be controlled. Alternatively, the controller 165 may control the amount of power applied to one or more of the heating components via control signals applied to the regulator 201.

Fig. 3B shows the heater wiring circuit 303 for the hybrid heater 169. One or more heating components (305A, 305B etc.), e.g. heating elements, are provided for the hybrid heater 169. The heating components in this example are resistive heating components. A first end of each heating component for the hybrid heater 169 is connected to the live terminal of the inverter 175 that is connected to the energy storage device 173. A second end of each heating component (305A, 305B) has a hybrid neutral connection ($N_H$) that is common to all heating components for the hybrid heater 169. By selectively turning on individual heating components, the amount of power applied to the hybrid heater 169 as a whole can be controlled.

Therefore, it can be seen that there are two separate heating circuits for the main heater 167 and hybrid heater 169. Each of the main heater and hybrid heater has a set of one or more heating elements or components. Each set of heating elements or components is arranged to operate using a different voltage source.

According to one example, the main heater 167 may have a maximum power rating of 1800 watts and the hybrid heater 169 may have a maximum power rating of 600 watts. In this example, each of the main heater and hybrid heater may have a single heating element. In another example, one or both of the main heater and hybrid heater may have more than one heating element.

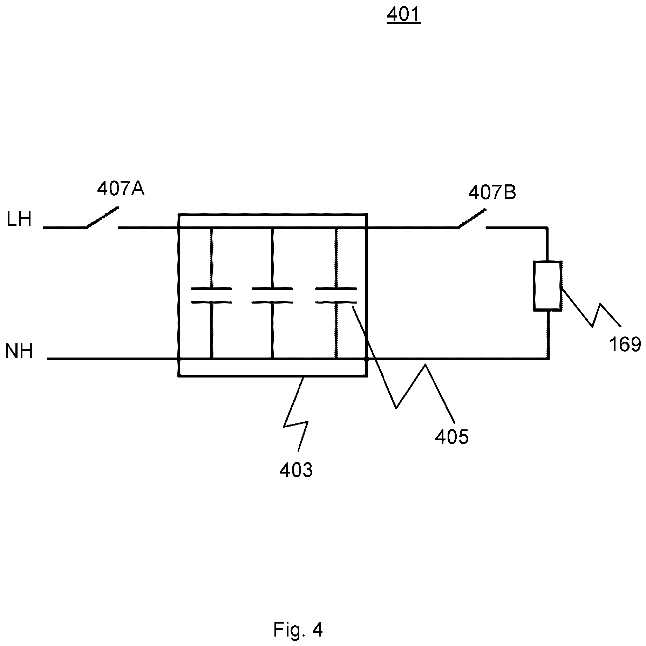

Fig. 4 shows an example of an energy storage system 401 for use with a liquid heating appliance.

As mentioned, herein, any suitable forms of energy storage may be used to form the energy storage device 173. In this example, the energy storage system 401 includes an energy storage device 173 that utilises capacitors as these have a faster rate of charge and discharge when compared to battery technology.

A circuit is shown with a capacitor bank 403 having a plurality of capacitors 405 arranged in parallel, and control switches (407A, 407B) to supply additional current for the hybrid heater 169. One or more of the capacitors may be super-capacitors.

A first switch 407A is controlled by the controller 165 to charge the bank of capacitors. A second switch 407B is controlled by the controller to discharge the bank of capacitors into, i.e. apply power to, the load (the hybrid heater 169). The switches (407A, 407B) are controlled by the controller 165 using an XOR (exclusive OR) operation to ensure that both switches are never open or closed at the same time.

It can therefore be seen that the controller is arranged, during a first mode of operation, to enable the energy storage device to be charged from the mains power. Also, it can be seen that the controller is arranged, during a second mode of operation, to enable the energy storage device to apply the stored power to the hybrid heater. The hybrid heater being one of multiple heating components in the appliance.

Further, it can be seen that in the second mode, the controller may also be arranged to determine whether the amount of power stored in the energy storage device is above a defined threshold value, where that defined threshold value has been stored in factory settings, for example. If the controller makes a positive determination that the amount of power stored in the energy storage device is above the defined threshold value, the controller may enable the energy storage device to apply the stored power to the hybrid heater.

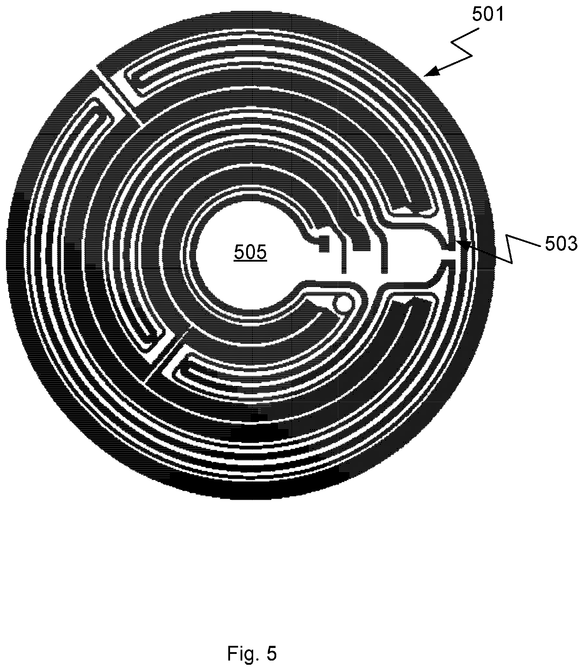

Fig. 5 shows an arrangement of heater wiring circuits and an energy storage system for use with a liquid heating appliance. This arrangement shows how the main heater elements 501 or components are interleaved with the hybrid heater elements 503 or components within the base 505 of the appliance.

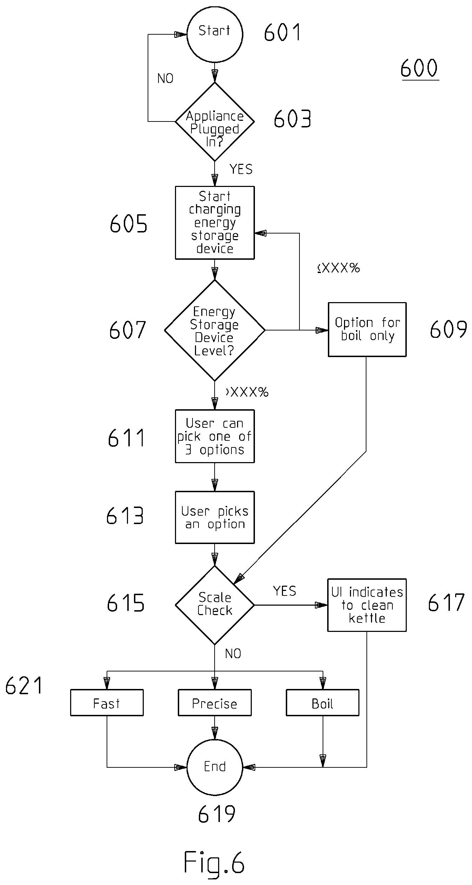

Fig. 6 shows a process flow diagram 600 for use in a liquid heating appliance.

The process starts at step 601. The controller initially checks to determine whether the appliance is powered by the mains power source at step 603. When the controller determines that power is connected, subsequently, the energy storage device is charged at step 605.

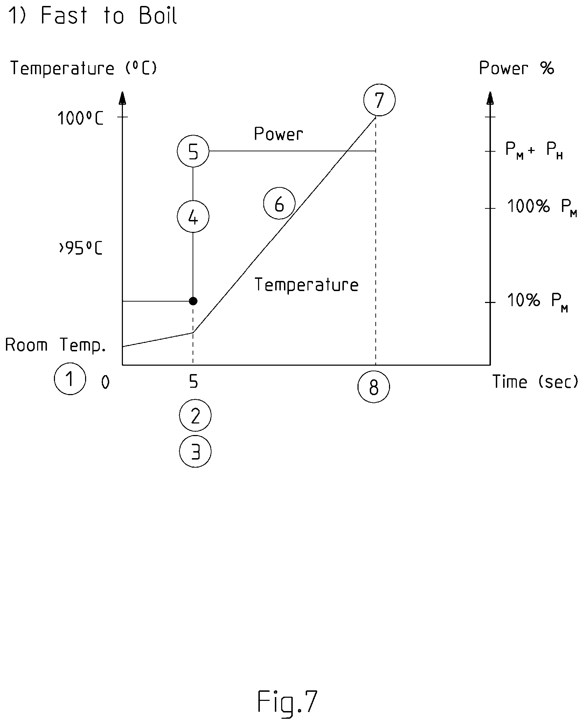

The controller runs an energy storage device charge level test at step 607 to determine if the energy storage device charge level is at or above a pre-determined threshold charge level at step 607. For example, the predetermined threshold charge level may be programmed to be 40% of a maximum charge level enabling the energy storage device to be used even when it is not fully charged. If the controller determines that the energy storage device is below the predetermined threshold charge level (e.g. below 40% of a maximum charge level), then the controller controls the UI of the appliance to ensure that one water heating mode is, or a limited number of heating modes are, made available to the user for selection on the UI at step 609. In this example, a single water heating mode "Standard Boil" is made available at step 609, where this mode is described below with reference to Fig. 7C. The controller continues to charge the energy storage device at step 605 until a user picks an available mode option using the UI.

When the controller determines from the energy storage device charge level test that the charge level of the energy storage device is above 40% of a maximum charge level, the controller controls the UI of the appliance to enable other water heating modes to be made available for selection by the user on the UI as shown at step 611. These heating modes include "Standard Boil", "Fast to Boil" and "Fast and Precise" as described below with reference to Figs 7A-7C. It will be understood that the threshold minimum charge level may be greater or less than 40%, such as 20%, 30%, 50%, 60%, 70% etc., as well as any values there-between.

At step 613, the user selects a mode option using the UI. At step 615, the controller initiates a scale check process to determine whether the appliance should be cleaned to remove excess scale. If the controller determines that scale is present, a control signal is sent to the UI to indicate on the display at step 617 to the user that the appliance should be cleaned. Further, the appliance does not initiate the mode of heating selected by the user at step 613, but instead ends the process and places the appliance back into standby mode and the process ends at step 619. The scale check is performed by the controller after the user has selected an option at step 613 because the main heater needs to be heated in order for the controller to perform the scale check. If there is scale on the main heater, then the scale will act as a blanket and the liquid NTC temperature will be substantially different from the heater Surface NTC and so will likely affect how the selected heating mode operates.

If the controller determines that scale is not present, the appliance heats up the water at step 621 using the mode chosen at step 613 (e.g. "Standard Boil", "Fast to Boil" or "Fast and Precise") and then, when completed, places the appliance back into standby mode and the process ends at step 619.

Fig. 7 shows a heating process profile termed "Fast to Boil" that is controlled by the controller when this mode of operation is selected by a user at step 613 in the process shown in Fig. 6. This process provides the user with a liquid heating option that heats the liquid to a desired temperature as fast as possible.

It will be understood that the desired temperature may be a single temperature value programmed into the controller, e.g. a value that is close to or at boiling point, e.g. 100 degrees Celsius. It will also be understood that, as an alternative, the desired temperature may be set by the user using the UI of the appliance. In this alternative, the desired temperature value may, after being selected by the user, be stored in memory for the controller to read and use in order to determine whether the desired temperature of the liquid has been reached based on the measured temperature of the water.

The process in Fig.7 is described with reference to the following process steps. Each step described below is indicated as a number in a circle on Fig. 7.

STEP 1: The controller for checking initial conditions and test purposes, applies a defined percentage of power to the main heater 167 at a percentage level much lower than that applied when heating the liquid. For example, the power applied during a test may be set at 10% of the maximum power used to heat a liquid using the appliance. It will be understood that other lower or higher percentage values may be used, such as 5%, 6%, 7%, 8%, 9%, 11% etc. The low level power applied during this test period is for a defined period of time, e.g. 5 seconds.

Between these 0 to 5 seconds, a dry boiling prevention test, by virtue of the E-fast leakage current in the heating assembly, is detected by the controller to see if the appliance is being used without sufficient liquid being placed within it. The leakage current provides for digital detection of whether there is dry boiling, or not.

STEP 2: After a sample of 5 seconds, if the optional heater Surface NTC temperature sensor is available, heater surface temperature is determined and is used instead of, or in addition to the E-fast leakage current to determine if dry boil is occurring. If the heater Surface NTC temperature is $\Delta$T<130C then no dry boiling is flagged.

In one embodiment, the Liquid NTC is used to detect dry boiling, however because there is time lag for heat to transfer from the heating element to the Liquid NTC, dry boiling detection and flagging is not as fast and efficient compared to Surface NTC. If the Liquid NTC rise $\Delta$T<100C (or alternative value programmed at time of manufacture or set by user) after the 5 second heating period, for example, then it is determined that the appliance is not attempting to "dry boil". If dry boiling is detected (see STEP 3), the controller switches off the appliance or places it in standby mode.

STEP 3: After the 5 second sample, calculate an approximate amount of liquid in the appliance. The equation used by the controller is $\Delta T \cdot m \cdot C° = P \cdot t$ where $\Delta T$ is the gradient temperature (the small gradient from room temperature up to 5 seconds, in this example), $m$ is the mass of water, $C°$ is a constant, $P$ is the applied power to the heating element and $t$ is the time used to initially apply power to the main heater (in this example, 5 seconds). Thus, rearranging the equation, $m$ can be calculated. If $m$ is determined by the controller to be below a defined threshold value, the controller switches the appliance to standby mode and displays a warning message on the UI. Otherwise, step 4 is initiated including the calculations below.

The controller calculates the temperature rise $\Delta$T, further derives the approximate water content inside the appliance, and then the approximate time Tc to boil. The end desired temperature is known, as is the initial room temperature and the $\Delta$T during the 5 second period. Thus, the desired temperature minus $\Delta$T during the 5 second period, minus room temperature, gives $\Delta$T for the final temperature. Therefore the equation can be rearranged for a time to boil calculation, in addition to detection of boiling by the liquid NTC. This ensures a backup in case the NTC fails or is inaccurate.

STEP 4: If the controller 165 determines that there is sufficient liquid in the appliance, or conversely determines that there is not insufficient liquid in the appliance, the controller switches 100% of available mains power to the main heater 167.

STEP 5: The controller 165 switches 100% of the available power in the energy storage device to the hybrid heater 169.

STEP 6: While both heaters (167, 169) are operating, the controller 165 continuously monitors the temperature of liquid NTC provided by the liquid temperature sensor 157.

STEP 7: If the controller determines that the liquid NTC reading has reached the defined desired temperature, or determines that the liquid NTC temperature reading has not increased for a defined period of time, e.g. 5 seconds, the controller 165 stops power being applied to both heaters (167, 169). The check to determine whether the temperature has not increased for a defined period of time is made to determine whether the temperature of the liquid has saturated, i.e. reached a peak dependent on the liquid and environmental conditions, and so subsequently stopped the heating process. For example, at higher altitudes, the temperature of water may never reach 100 degrees Celsius and may boil, for example, at 98 degrees Celsius.

The controller therefore control the amount of the mains power being applied to the main heater based on a determination of whether the sensed liquid temperature has reached a defined threshold temperature. Also, as an alternative, the controller controls the amount of the mains power being applied to the main heater based on a determination of whether the sensed liquid temperature has not increased for a defined period of time.

STEP 8: After completion of step 7, the controller turns off the power being applied to the main heater and the hybrid heater.

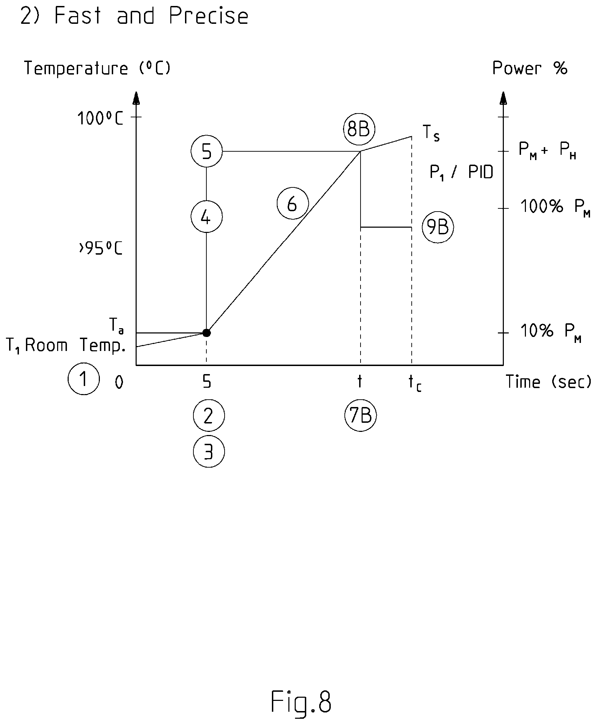

Fig. 8 shows a heating process profile termed "Fast and Precise" that is used by the controller when this mode of operation is selected by a user at step 613 in the process shown in Fig. 6. This process is more accurate at reaching a desired (target) temperature as less power is applied closer to the desired temperature, and so there is less chance of overshooting the desired temperature during the heating process. For example, this mode may be desirable when a user wishes to heat water up to a temperature less than 100 degrees Celsius.

According to this process, steps 1-6 as described above with reference to the "Fast to Boil" mode described with reference to Fig. 7 are also executed by the controller in this "Fast and Precise" mode.

Steps 7 and 8 of the "Fast to Boil" mode are replaced with the following 3 steps 7B, 8B and 9B and are shown in Fig. 8 as references in circles.

STEP 7B: An equation is used for time calculation to keep applying a percentage of heat from the heating element;

$$t = t_c - 10 = \frac{(T_s - T_a)P_m}{2(T_a - T_i)(P_m + P_h)} - 10$$

. Where $T_s$ is the end desired temperature, $T_a$ is the temperature after step 3 (in this example 5 seconds), $T_i$ is the initial temperature (ambient / initial temperature), $P_m$ is the main heater wattage and $P_h$ is the hybrid heater wattage, $t_c$ is the calculated time to boil.

$$t = t_c - 10 = \frac{(T_s - T_a)P_m}{2(\Delta T)(P_m + P_h)} - 10$$

.

STEP 8B: The hybrid heater is switched off by the controller at time (t) = $t_c$ - 10. It will be understood that at this stage the main heater power that is applied may be 100% of available power or less than 100% of available power to enable the desired temperature to be reached precisely. The amount of power for the main heater will depend on, at least, the desired temperature and the temperature the water has reached when the hybrid power is turned off.

STEP 9B: The main heater is switched off by the controller when the set temperature with an applied offset is reached. The offset may, for example, be 5 degrees Celsius. It will be understood that the offset value is preprogramed into the appliance at the time of manufacture and that the offset value may be any other suitable value.

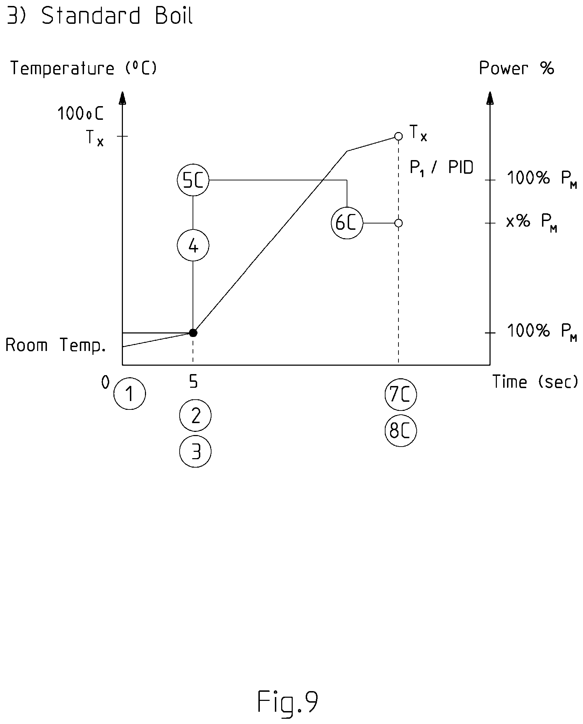

Fig. 9 shows a process profile termed "Standard Boil" that is used by the controller when this mode of operation is selected by a user at step 613 in the process shown in Fig. 6.

According to this process, only the main heater 167 is heated up. Steps 1-4 as described above with reference to the "Fast to Boil" mode are executed by the controller in this "Standard Boil" mode.

New steps 5C, 6C, 7C and 8C are implemented to replace steps 5 to 8 described above in relation to the "Fast to Boil" mode.

STEP 5C: the controller 165 applies 100% mains power to the main heater until a set temperature with an applied offset is reached. The offset may, for example, be 5 degrees Celsius. It will be understood that the offset value is preprogramed into the appliance at the time of manufacture and that the offset value may be any other suitable value.

STEP 6C: After step 5C, the controller 165 applies a reduced amount of power to the main heater. For example, a 60% of available power is applied to the main heater to enable the heater to heat the liquid so it reaches the predetermined (e.g. selected) temperature.

STEP 7C: If the controller 165 determines that the liquid NTC reading has reached the defined desired temperature, or determines that the liquid NTC temperature reading has not increased for a defined period of time, e.g. 5 seconds, the controller 165 stops power being applied to the main heater 167.

STEP 8C: The controller 165 stops power being applied to the main heater.

In terms of priority of operations for power control by the controller, the following hierarchy is provided as one example. The system operational priority for determining how power is to be applied to the heaters may be, for example (in order of highest priority first) i) dry boiling determination using an E-fast signal detection, ii) determining whether the energy storage device is charged, iii) determining whether a measured surface heater temperature (Surface NTC) has reached a threshold surface heater temperature and iv) determining whether a measured liquid temperature (Liquid NTC) has reached a threshold liquid temperature.

In terms of controlling the conditions for charging or using the energy storage device using the controller, the following hierarchy is provided as one example. The operational priority to be applied, for example, (in order of highest priority first) is i) overheating prevention by measuring whether the heater is within a defined temperature range using the measured surface heater temperature (Surface NTC), ii) avoiding complete discharge of the energy storage device by stopping the energy storage device from supplying power to the hybrid heater upon detection that the charge level is below a defined depletion threshold, and iii) avoiding overcharging the energy storage device by stopping the charging of the energy storage device upon detection that the charge level has reached a defined maximum charge threshold.

**Industrial Applicability**

The arrangements described are applicable to liquid heating appliance industries and particularly for industries that manufacture liquid heating appliances for making a beverage.

The foregoing describes only some embodiments of the present invention, and modifications and/or changes can be made thereto without departing from the scope of the invention, the embodiments being illustrative and not restrictive.

**Claims**

1. A liquid heating appliance (101) for making a beverage, the liquid heating appliance (101) comprising:

   a plurality of heating components (167, 169) for heating a liquid, where at least a first of the plurality of heating components (167) is powered by using mains power, and
   a power management system (200),
   wherein the power management system (200) comprises:

   a controller (165), and
   an energy storage device (173),
   wherein the controller (165) is arranged to control an amount of mains power applied to a first of the plurality of heating components (167), and further arranged to control an amount of power from the energy storage device (173) to be applied to at least a second of the plurality of heating components (169),
   **characterised in that** the liquid heating appliance (101) further comprises an inverter and a power regulator (201), wherein the inverter is arranged to convert a direct current power output from the energy storage device (173) into an alternating current power output , and the power regulator (201) is arranged to regulate how much power of the alternating current power output is applied to the at least second of the plurality of heating components (169).

2. The liquid heating appliance (101) of claim 1, wherein the controller (165) is arranged, during a first mode of operation, to enable the energy storage device (173) to be charged from the mains power, and, during a second mode of operation, enable the energy storage device (173) to apply the stored power to the at least second of the plurality of heating components (169).

3. The liquid heating appliance (101) of claim 2, wherein, in the second mode, the controller (165) is further arranged to determine whether the amount of power stored in the energy storage device (173) is above a defined threshold value, and upon a positive determination, enable the energy storage device (173) to apply the stored power to the at least second of the plurality of heating components (169).

4. The liquid heating appliance (101) of claim 1, wherein the energy storage device (173) comprises at least one of a capacitor, a capacitor bank, a super capacitor, a super capacitor bank, or a battery.

5. The liquid heating appliance (101) of claim 1, wherein the liquid heating appliance (101) has two heating components (501, 503), wherein the two heating components (501, 503) are interleaved with each other.

6. The liquid heating appliance (101) of claim 1 further comprising a liquid temperature sensor (157), wherein the liquid temperature sensor (157) is arranged to sense a temperature of the liquid being heated by the liquid heating appliance (101), wherein the controller (165) is further arranged to control the amount of power being applied to at least one of the plurality of heating components (167, 169) based on the sensed liquid temperature.

7. A method of controlling the provision of power in a liquid heating appliance (101) for making a beverage, the method comprising the steps of:

   controlling an amount of mains power being applied to a first of a plurality of heating components (167) in the liquid heating appliance (101), and
   controlling an amount of stored power in an energy storage device (173) integrated with the liquid heating appliance (101) being applied to at least a second of the plurality of heating components (169),
   **characterised by** converting a direct current power output from the energy storage device (173) into an alternating current power output, and regulating how much power of the alternating current power output is applied to the at least second of the plurality of heating components (169).

8. The method of claim 7, further comprising the steps of, during a first mode of operation, enabling the energy storage device (173) to be charged from the mains power, and, during a second mode of operation, enabling the energy storage device (173) to apply the stored power to the at least second of the plurality of heating components (169).

9. The method of claim 9, further comprising the steps of, when in the second mode, determining whether the amount of power stored in the energy storage device (173) is above a defined threshold value, and upon a positive determination, enabling the energy storage device (173) to apply the stored power to the at least second of the plurality of heating components (169).

10. The method of claim 7 further comprising the steps of sensing a temperature of the liquid being heated by the liquid heating appliance (101), and controlling the amount of power being applied to at least one of the plurality of heating components (167, 169) based on the sensed liquid temperature.

11. The method of claim 10, further comprising the step of controlling the amount of the mains power applied to the first heating component (167) based on the temperature of the liquid.

12. A microcontroller readable medium (164), having a program recorded thereon, where the program is configured to make a microcontroller (165) execute a procedure to control an amount of mains power being applied to a first of a plurality of heating components (167) in a liquid heating appliance (101) in accordance with the method of any one of claims 7 to 11.

**Patentansprüche**

1. Flüssigkeitserhitzungsgerät (101) zur Herstellung eines Getränks, das Flüssigkeitserhitzungsgerät (101) umfassend:

   eine Vielzahl von Heizungskomponenten (167, 169) zum Erhitzen einer Flüssigkeit, wobei mindestens eine erste der Vielzahl von Heizungskomponenten (167) durch die Verwendung von Netzstrom betrieben wird, und ein Energieverwaltungssystem (200),
   wobei das Energieverwaltungssystem (200) Folgendes umfasst:

   eine Steuerung (165), und
   eine Energiespeichervorrichtung (173),
   wobei die Steuerung (165) angeordnet ist, um eine Menge an Netzstrom zu steuern, der an eine erste der Vielzahl von Heizungskomponenten (167) angelegt wird, und ferner angeordnet ist, um eine Menge an Strom von der Energiespeichervorrichtung (173) zu steuern, die an mindestens eine zweite der Vielzahl von Heizungskomponenten (169) angelegt wird,
   **dadurch gekennzeichnet, dass** das Flüssigkeitserhitzungsgerät (101) ferner einen Wechselrichter und einen Leistungsregler (201) umfasst, wobei der Wechselrichter angeordnet ist, um eine Gleichstromleistungsausgabe von der Energiespeichervorrichtung (173) in eine Wechselstromleistungsausgabe umzuwandeln, und der Leistungsregler (201) angeordnet ist, um zu regulieren, wie viel Leistung der Wechselstromleistungsausgabe an die mindestens zweite der Vielzahl von Heizkomponenten (169) angelegt wird.

2. Flüssigkeitserhitzungsgerät (101) nach Anspruch 1, wobei die Steuerung (165) angeordnet ist, um während einer ersten Betriebsart die Energiespeichervorrichtung (173) in die Lage zu versetzen, vom Netzstrom aufgeladen zu werden, und während einer zweiten Betriebsart die Energiespeichervorrichtung (173) in die Lage zu versetzen, die gespeicherte Energie auf die mindestens zweite der Vielzahl von Heizungskomponenten (169) anzuwenden.

3. Flüssigkeitserhitzungsgerät (101) nach Anspruch 2, wobei die Steuerung (165) in der zweiten Betriebsart ferner angeordnet ist, um zu bestimmen, ob die in der Energiespeichervorrichtung (173) gespeicherte Energiemenge über einem definierten Schwellenwert liegt, und bei einer positiven Bestimmung die Energiespeichervorrichtung (173) in die Lage zu versetzen, die gespeicherte Energie auf die mindestens zweite der mehreren Heizungskomponenten (169) anzuwenden.

4. Flüssigkeitserhitzungsgerät (101) nach Anspruch 1, wobei die Energiespeichervorrichtung (173) mindestens einen Kondensator, eine Kondensatorbank, einen Superkondensator, eine Superkondensatorbank oder eine Batterie umfasst.

5. Flüssigkeitserhitzungsgerät (101) nach Anspruch 1, wobei das Flüssigkeitserhitzungsgerät (101) zwei Heizungskomponenten (501, 503) aufweist, wobei die beiden Heizungskomponenten (501, 503) ineinander verschachtelt sind.

**6.** Flüssigkeitserhitzungsgerät (101) nach Anspruch 1, ferner umfassend einen Flüssigkeitstemperatursensor (157), wobei der Flüssigkeitstemperatursensor (157) angeordnet ist, um eine Temperatur der von dem Flüssigkeitserhitzungsgerät (101) erhitzten Flüssigkeit zu erfassen, wobei die Steuerung (165) ferner angeordnet ist, um die Leistungsmenge, die mindestens einer der mehreren Heizungskomponenten (167, 169) zugeführt wird, basierend auf der erfassten Flüssigkeitstemperatur zu steuern.

**7.** Verfahren zur Steuerung der Energieversorgung eines Flüssigkeitserhitzungsgeräts (101) zur Herstellung eines Getränks, das Verfahren umfassend die folgenden Schritte:

Steuern einer Netzstrommenge, die an eine erste von mehreren Heizungskomponenten (167) in dem Flüssigkeitserhitzungsgerät (101) angelegt wird, und
Steuern einer Menge an gespeicherter Energie in einer in das Flüssigkeitserhitzungsgerät (101) integrierten Energiespeichervorrichtung (173), die auf mindestens eine zweite der mehreren Heizungskomponenten (169) angewendet wird, **dadurch gekennzeichnet, dass** eine Gleichstromleistungsausgabe von der Energiespeichervorrichtung (173) in eine Wechselstromleistungsausgabe umgewandelt wird und geregelt wird, wie viel Leistung der Wechselstromleistungsausgabe an die mindestens zweite der Vielzahl von Heizungskomponenten (169) angelegt wird.

**8.** Verfahren nach Anspruch 7, ferner umfassend die Schritte, dass während einer ersten Betriebsart die Energiespeichervorrichtung (173) vom Netz aufgeladen wird, und dass während einer zweiten Betriebsart die Energiespeichervorrichtung (173) die gespeicherte Energie auf die mindestens zweite der mehreren Heizungskomponenten (169) anwendet.

**9.** Verfahren nach Anspruch 9, ferner umfassend die Schritte, in der zweiten Betriebsart zu bestimmen, ob die in der Energiespeichervorrichtung (173) gespeicherte Energiemenge über einem definierten Schwellenwert liegt, und bei positiver Bestimmung die Energiespeichervorrichtung (173) in die Lage zu versetzen, die gespeicherte Energie auf die mindestens zweite der Vielzahl von Heizungskomponenten (169) anzuwenden.

**10.** Verfahren nach Anspruch 7, ferner umfassend die Schritte des Erfassens einer Temperatur der von dem Flüssigkeitserhitzungsgerät (101) erhitzten Flüssigkeit und des Steuerns der Leistungsmenge, die mindestens einer der mehreren Heizungskomponenten (167, 169) zugeführt wird, basierend auf der erfassten Flüssigkeitstemperatur.

**11.** Verfahren nach Anspruch 10, ferner umfassend den Schritt des Steuerns der der ersten Heizungskomponente (167) zugeführten Netzstrommenge basierend auf der Temperatur der Flüssigkeit.

**12.** Mikrocontroller-lesbares Medium (164) mit einem darauf aufgezeichneten Programm, wobei das Programm konfiguriert ist, um einen Mikrocontroller (165) zu veranlassen, eine Prozedur auszuführen, um eine Menge an Netzstrom zu steuern, die an eine erste einer Vielzahl von Heizungskomponenten (167) in einem Flüssigkeitserhitzungsgerät (101) nach dem Verfahren nach einem der Ansprüche 7 bis 11 angelegt wird.

**Revendications**

**1.** Appareil de chauffage de liquide (101) destiné à préparer une boisson, l'appareil de chauffage de liquide (101) comprenant :

une pluralité d'éléments chauffants (167, 169) destiné à chauffer un liquide, où au moins un premier élément de la pluralité d'éléments chauffants (167) est alimenté à l'aide d'une alimentation secteur, et un système de gestion d'alimentation (200),
dans lequel le système de gestion d'alimentation (200) comprend :

un dispositif de commande (165), et
un dispositif de stockage d'énergie (173), dans lequel le dispositif de commande (165) est configuré pour régler une quantité d'alimentation secteur appliquée à un premier élément chauffant de la pluralité d'éléments chauffants (167), et en outre pour régler une quantité d'alimentation provenant du dispositif de stockage d'énergie (173) à appliquer à au moins un élément de la pluralité d'éléments chauffants (169), **caractérisé en ce que** l'appareil de chauffage de liquide (101) comprend en outre un onduleur et un régulateur de puissance (201), dans lequel l'onduleur est conçu pour convertir une sortie d'alimentation en courant continu à partir du dispositif de stockage d'énergie (173) en une sortie d'alimentation en courant alternatif, et le régulateur de puissance (201) est conçu pour régler la quantité de puissance de la sortie d'alimentation en courant alternatif appliquée à l'au moins un second élément de la pluralité d'éléments chauffants (169).

**2.** Appareil de chauffage de liquide (101) selon la revendication 1, dans lequel le dispositif de commande (165) est conçu, au cours d'un premier mode de fonctionnement, pour permettre au dispositif de stockage d'énergie (173) d'être chargé à partir de l'alimentation secteur et, au cours d'un second mode de fonctionnement, pour permettre au dispositif de stockage d'énergie (173) d'appliquer l'énergie stockée à l'au moins un second élément de la pluralité d'éléments chauffants (169).

**3.** Appareil de chauffage de liquide (101) selon la revendication 2, dans lequel, dans le second mode, le dispositif de commande (165) est en outre conçu pour déterminer si la quantité d'énergie stockée dans le dispositif de stockage d'énergie (173) est supérieure à une valeur seuil définie et, en cas d'une détermination positive, pour permettre au dispositif de stockage d'énergie (173) d'appliquer l'énergie stockée à l'au moins un second élément de la pluralité d'éléments chauffants (169).

**4.** Appareil de chauffage de liquide (101) selon la revendication 1, dans lequel le dispositif de stockage d'énergie (173) comprend au moins un condensateur, une batterie de condensateurs, un supercondensateur, une batterie de supercondensateurs ou une batterie.

**5.** Appareil de chauffage des liquides (101) selon la revendication 1, dans lequel l'appareil de chauffage de liquide (101) présente deux éléments chauffants (501, 503), dans lequel les deux éléments chauffants (501, 503) sont imbriqués l'un dans l'autre.

**6.** Appareil de chauffage de liquide (101) selon la revendication 1 comprend en outre un capteur de température de liquide (157), dans lequel le capteur de température de liquide (157) est conçu pour détecter une température du liquide chauffé par l'appareil de chauffage de liquide (101), dans lequel le dispositif de commande (165) est également conçu pour régler la quantité d'énergie appliquée à au moins un élément de la pluralité d'éléments chauffants (167, 169) sur la base de la température de liquide détectée.

**7.** Procédé de commande de la fourniture d'énergie dans un appareil de chauffage de liquide (101) destiné à préparer une boisson, le procédé comprenant les étapes consistant à :

régler la quantité d'alimentation secteur appliquée à un premier élément chauffant (167) de l'appareil de chauffage de liquide (101), et régler la quantité d'énergie stockée dans un dispositif de stockage d'énergie (173) intégré à l'appareil de chauffage de liquide (101) qui est appliquée à au moins un second élément de la pluralité d'éléments chauffants (169), **caractérisé par** la conversion d'une sortie d'alimentation en courant continu à partir du dispositif de stockage d'énergie (173) en une sortie d'alimentation en courant alternatif, et le réglage de la quantité de puissance de la sortie d'alimentation en courant alternatif appliquée à l'au moins un second élément de la pluralité d'éléments chauffants (169).

**8.** Procédé selon la revendication 7, comprenant en outre les étapes consistant à, au cours d'un premier mode de fonctionnement, permettre au dispositif de stockage d'énergie (173) d'être chargé à partir de l'alimentation secteur et, au cours d'un second mode de fonctionnement, permettre au dispositif de stockage d'énergie (173) d'appliquer l'énergie stockée à l'au moins un second élément de la pluralité d'éléments chauffants (169).

**9.** Procédé selon la revendication 9, comprenant en outre les étapes consistant à, dans le second mode, déterminer si la quantité d'énergie stockée dans le dispositif de stockage d'énergie (173) est supérieure à une valeur seuil définie et, en cas de détermination positive, permettre au dispositif de stockage d'énergie (173) d'appliquer l'énergie stockée à l'au moins un second élément de la pluralité d'éléments chauffants (169).

**10.** Procédé selon la revendication 7 comprenant en outre les étapes consistant à détecter une température du liquide chauffé par l'appareil de chauffage de liquide (101) et régler la quantité d'alimentation appliquée à l'au moins un élément de la pluralité d'éléments chauffants (167, 169) sur la base de la température de liquide détectée.

**11.** Procédé selon la revendication 10, comprenant en outre l'étape consistant à régler la quantité d'alimentation secteur appliquée au premier élément chauffant (167) sur la base de la température de liquide.

**12.** Support lisible par un microcontrôleur (164), sur lequel est enregistré un programme, le programme étant configuré pour qu'un microcontrôleur (165) exécute une procédure de réglage d'une quantité d'alimentation secteur appliquée à un premier élément d'une pluralité d'éléments chauffants (167) dans un appareil de chauffage de liquide (101), conformément au procédé selon l'une quelconque des revendications 7 à 11.

Fig.1A

Fig.1B

Fig.2

Fig.3A

Fig.3B

**401**

Fig. 4

Fig. 5

Fig.6

## 1) Fast to Boil

Fig.7

## 2) Fast and Precise

Fig.8

## 3) Standard Boil

Fig.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2536000 A
- WO 2008155538 A2
- JP 6065641 B
- JP 4869375 B